# EUROPÄISCHE PATENTSCHRIFT

(11) **EP 3 669 278 B1**
(45) Veröffentlichungstag und Bekanntmachung des Hinweises auf die Patenterteilung: **17.01.2024**
(21) Anmeldenummer: 18785856.8
(22) Anmeldetag: 27.09.2018
(51) Int. Cl.: G06F 16/23

(54) **VERFAHREN UND VORRICHTUNG ZUM UNIDIREKTIONALEN UND INTEGRITÄTSGESCHÜTZTEN SYNCHRONISIEREN VON LOG-DATEN**
METHOD AND DEVICE FOR A UNIDIRECTIONAL AND INTEGRITY-PROTECTED SYNCHRONIZATION OF LOG DATA
PROCÉDÉ ET DISPOSITIF POUR LA SYNCHRONISATION UNI-DIRECTIONALE ET À INTÉGRITÉ PROTÉGÉE DE DONNÉES DE JOURNAUX

(30) Priorität: 17.10.2017 DE 102017218531
(43) Veröffentlichungstag der Anmeldung: 24.06.2020
(73) Patentinhaber: Siemens Mobility GmbH, 81739 München (DE)
(72) Erfinder: FALK, Rainer, 85586 Poing (DE); SEIFERT, Matthias, 21244 Buchholz (DE); WIMMER, Martin, 85579 Neubiberg (DE)
(74) Vertreter: Siemens Patent Attorneys
(86) Internationale Anmeldenummer: PCT/EP2018/076239
(87) Internationale Veröffentlichungsnummer: WO 2019/076600

(56) Entgegenhaltungen:
- US-B1- 9 507 798

## Beschreibung

Die Erfindung betrifft ein Verfahren und eine Vorrichtung zum unidirektionalen und integritätsgeschützten Synchronisieren von Log-Daten zwischen mindestens einem ersten Netzwerk und einem zweiten Netzwerk.

Die Statusüberwachung oder Fernanalyse von Geräten in Steuerungsnetzwerken, wie zum Beispiel in industriellen Großanlagen oder in Bahnnetzen, wird üblicherweise anhand von Log-Daten der zu überwachenden Geräte durchgeführt. Dazu ist es praktikabel die Log-Daten für die Analyse zentral auf einem Log-Server zu sammeln, gegebenenfalls zu speichern und zur Analyse weiterzuleiten. Das Sammeln und Analysieren kann entweder zentral im jeweiligen Netzwerk oder in einem externen Netz erfolgen. Im Fall von sicherheitskritischen Netzwerken ist es oft sinnvoll, die Log-Daten extern zu analysieren, da nur ein eingeschränkter Netzwerkzugriff besteht. Aktuelle Software oder Hardware in das sicherheitskritische Netzwerk einzubringen kann dabei häufig sehr aufwendig sein. Außerdem muss die Rückwirkungsfreiheit beachtet werden, d.h. das Einbringen von Daten in das sicherheitskritische Netzwerk ist streng geregelt oder verboten, um die Integrität und Sicherheit des Netzwerks nicht zu gefährden.

So ergibt sich folgende Ausgangssituation für die Analyse von Log-Daten aus einem Netzwerk mit hoher Sicherheitsanforderung. Die Geräte eines Systems übermitteln üblicherweise Log-Daten an einen Log-Server, der mit dem Netzwerk verbunden ist. Die Log-Daten können Informationen über Aktionen, Prozessschritte, Systemzustände oder Änderungen dieser Informationen umfassen. Weitere Anwendungsfälle sind z.B. das Überwachen eines Systems, eine Fehleranalyse oder ein optimiertes Wartungsmanagement. Die Log-Daten aus einem Netzwerk mit hoher Sicherheitsanforderung werden in ein zweites Netzwerk zur Diagnose oder Analyse übertragen. Dieses zweite Netzwerk kann offen oder mit einer geringeren Sicherheitsanforderung sein. Daraus entstehen besondere Bedingungen für die Extraktion der Log-Daten aus dem sicherheitskritischen Netzwerk. Die Kopplung der Netzwerke über eine filterende Firewall oder über ein Virtuelles Privates Netzwerk, auch kurz VPN genannt, erfüllt die Bedingung der Rückwirkungsfreiheit nicht. Sogenannte Datendioden stellen hierbei eine Alternative dar, da sie eine unidirektionale Kommunikation ermöglichen, doch sie sind aufwendig und teuer. Datendioden werden in der Regel für die Übertragung von vertraulichen Informationen verwendet. Allerdings verhindern sie eine Rückmeldung bei Fehlermeldungen.

Cloud-Lösungen können für die externe und zentrale Speicherung und Sammlung von Log-Daten genutzt werden. Damit kann zentral eine Verwaltung von Log-Daten erzielt werden. Die Übertragung der Daten in die Cloud kann beispielsweise auch rückwirkungsfrei über eine Datendiode erfolgen. Allerdings müssen hierbei oft die Daten im Netzwerk zunächst in ein Cloud-kompatibles Format konvertiert und gespeichert werden. Dazu muss für die Sammlung der Daten eine zusätzliche Komponente in das Netzwerk eingebracht und konfiguriert werden, was bei sicherheitskritischen Netzwerken oft mit einem großen technischen Aufwand verknüpft ist, um den erforderlichen Sicherheitsstandards zu entsprechen.

Des Weiteren bedarf das Auswerten von Log-Daten aus einem oder mehreren Netzwerken mit verschiedenen Geräten zeitlicher Synchronisation, um beispielsweise die zeitliche Abfolge von Prozessen verschiedener Geräte in die richtige Reihenfolge und in Beziehung zueinander setzen und überwachen zu können. Die Zeitsynchronisation zwischen verschiedenen, voneinander unabhängigen Datennetzen ist allerdings nicht immer gegeben. Selten sind die inneren Uhren verschiedener Systeme auf eine gemeinsame Zeit, z.B. mittels eines GPS-Empfängers, synchronisiert.

Außerdem können innerhalb eines Netzwerks die Systemzeiten einzelner Geräte asynchron sein aufgrund einer fehlenden Synchronisation der Systemzeiten, eines absichtlichen zeitlichen Versatzes oder verschiedenen Zeitformaten oder Zeitzonen. Zum Beispiel können verschiedene Geräte Log-Nachrichten mit Zeitstempeln in verschiedenen Zeitformaten aufweisen oder ihre Systemzeit kann in unterschiedlichen Zeitzonen, also nicht notwendigerweise in der koordinierten Weltzeit, angegeben sein. Wenn Log-Daten mit verschiedenen Zeitstempeln zentral gesammelt werden ohne dass eine Synchronisation stattfindet, ist eine Analyse in korrekter Reihenfolge nicht möglich.

In US9507798B1 wird eine Technik zum Protokollieren von Ereignissen in einem Datenspeichersystem beschrieben, die das Bestimmen einer Teilmenge von Speicherprozessoren des Datenspeichersystems als Clients umfasst, die Protokolleinträge erzeugen, und einer anderen Teilmenge der Speicherprozessoren als Server, die Protokolleinträge empfangen.

In US9575987B2 wird ein System beschrieben, um Information aus einem Netzwerk von einer Referenz-Datenbank über eine Einweg-Datenübertragungseinheit zu einer externen Datenbank in einem zweiten Netzwerk zu kopieren. Um die beiden Datenbanken abzugleichen, wird im ersten Netzwerk eine Update-Datei erstellt, welche im zweiten Netzwerk empfangen wird. Diese Update-Datei ist eine Datei der Datenbank selbst, worin Änderungen der Datenbank festgehalten werden. Die Remote-Datenbank wird entsprechend der Update-Information aktualisiert. Somit wird die gesamte Referenz-Datenbank in das zweite Netzwerk gespiegelt und nachfolgende Änderungen werden mit Hilfe der Update-Datei rekonstruiert. Die Synchronisation der Datenbanken ist somit dateibasiert, d.h. die einzelnen Änderungen werden zunächst in die Update-Datei geschrieben, welche anschließend in ein zweites Netzwerk übermittelt und wieder ausgelesen wird. Daraus ergibt sich ein messbarer, nicht zu vernachlässigender Zeitversatz, was ein Problem für eine unmittelbare Analyse oder Reaktion auf Log-Ereignisse darstellt. Das Schreiben und Lesen von Dateien birgt zudem die Gefahr, dass Zugriffskonflikte entstehen, wenn z.B. Log-Änderungen auf der Basis von Dateiänderungen erkannt werden. Darüber hinaus erfolgt keine zeitliche Synchronisation zwischen den Systemzeiten des ersten und zweiten Netzwerks. So ist es nicht möglich, Log-Ereignissen mit anderen Log-Ereignissen, zum Beispiel aus anderen Netzwerken, verlässlich in einen korrekten zeitlichen Bezug zu setzen.

Es ist daher die Aufgabe der vorliegenden Erfindung eine einfache und kostengünstige Möglichkeit zu schaffen, Log-Daten aus einem Netzwerk mit hoher Sicherheitsanforderung in ein zweites Netzwerk ohne Zeitversatz unidirektional zu übermitteln und dabei die zeitliche Reihenfolge der Log-Ereignisse von unterschiedlichen Geräten sicherzustellen und die Integrität und die Vollständigkeit der kopierten Log-Daten zu prüfen.

Die Aufgabe wird durch die in den unabhängigen Ansprüchen beschriebenen Maßnahmen gelöst. In den Unteransprüchen sind vorteilhafte Weiterbildungen der Erfindung dargestellt.

Mit Hilfe dieses Verfahrens können Log-Daten aus mindestens einem Netzwerk in ein zweites Netzwerk einfach und kostengünstig übertragen und synchronisiert werden. Dabei kann das erste Netzwerk eine hohe und das zweite Netzwerk eine geringere Sicherheitsanforderung aufweisen. Zum Beispiel kann es sich beim ersten Netzwerk um ein sicherheitskritisches Netzwerk und beim zweiten um ein Diagnosenetzwerk handeln. Durch die unidirektionale Kopplungseinheit, die nur einen Datenstrom vom ersten in das zweite Netzwerk erlaubt, wird sichergestellt, dass kein unzulässiger Datenverkehr in das sicherheitskritische Netz eingeht.

Die Log-Daten, d.h. die mitgehörten Daten und die zugeordneten Metadaten, werden zwischen den Netzwerken synchronisiert, d.h. sie werden in ein zweites Netzwerk übertragen. Anhand der Metadaten werden die Log-Daten in die richtige zeitliche Reihenfolge gebracht. Wenn die zeitliche Zuordnung der kopierten Log-Daten und somit eine mögliche Abhängigkeit der Log-Daten voneinander im zweiten Netzwerk mit der Konfiguration im ersten Netzwerk übereinstimmt, kann zeitnah eine Überwachung oder Analyse durchgeführt werden.

Jeder kopierten Log-Nachricht wird eine Meta-Nachricht zugeordnet. Die Metadaten bilden die Grundlage für die Synchronisation der Log-Daten im zweiten Netzwerk. Anhand der Metadaten, die zusammen mit der Kopie der Log-Daten in das zweite Netzwerk übertragen werden, kann ihre richtige Reihenfolge und somit mögliche Abhängigkeiten der Log-Daten voneinander bestimmt werden. Bei der vorliegenden Erfindung muss lediglich ein Log-Server im ersten Netzwerk betrieben werden, der die Log-Daten erfasst. Solch eine Konfiguration ist üblicherweise in Steuerungsnetzwerken bereits vorhanden, so dass diese Erfindung darauf aufbauen kann.

Gemäß dem Verfahren wird mit den Metadaten somit ein erfindungsgemäß gebildetes Datenformat erzeugt, das die Log-Daten hinreichend beschreibt, um nach einer Übertragung der Log-Daten in ein zweites Netzwerk dort eine Synchronisation durchzuführen.

In einer vorteilhaften Ausführungsform des Verfahrens umfassen die Metadaten mindestens eine der Informationen aus Zeitinformation, Integritätsinformation, Ursprungsinformation und Vollständigkeitsinformation.

Die Metadaten werden beim Mithören und Kopieren der Log-Daten, die von den Geräten an den ersten Log-Server gesendet werden, gebildet. Sie umfassen die notwendige Information über die Log-Daten und erlauben somit deren Synchronisation und Prüfung im zweiten Netzwerk. Anhand der Zeitinformation, zum Beispiel dem Zeitpunkt eines Log-Ereignisses, kann eine korrekte zeitliche Zuordnung im zweiten Netzwerk erfolgen. Die Informationen werden in einem erfindungsgemäß gebildeten Datenformat gespeichert. Die Metadaten ermöglichen die Prüfung des Ursprungs und der Vollständigkeit der übertragenen Log-Daten im zweiten Netzwerk. So können Informationen über das jeweilige Gerät, das die Log-Daten gesendet hat und der Umfang, z.B. die Größe, der Log-Daten selbst in den Metadaten hinterlegt werden.

In einer weiteren vorteilhaften Ausführungsform des Verfahrens werden im ersten Netzwerk kontinuierlich Änderungen der Log-Daten und/oder der zugehörigen Metadaten gegenüber der vorher gesendeten Log-Daten und Metadaten erkannt und lediglich die Änderungen in das zweite Netzwerk übertragen.

Mit dieser Ausführungsform wird eine effiziente Synchronisation der Log-Daten sichergestellt. Beim ersten Übertragen der Log-Daten in das zweite Netzwerk werden die gesamten Daten, d.h. die Log-Daten und die zugeordneten Metadaten, synchronisiert. Bei nachfolgenden Änderungen werden im ersten Netzwerk nur die entsprechend geänderten Log-Daten und Metadaten weitergeleitet. Dies hat den Vorteil, dass die Synchronisierung noch schneller und zeitnah durchgeführt werden kann. Das Erkennen von Änderungen der Log-Daten und/oder Metadaten gegenüber dem vorherigen Datenbestand verläuft kontinuierlich, so dass Aktualisierungen unmittelbar festgestellt werden können. Diese können, sobald erkannt, unmittelbar in das zweite Netzwerk übertragen werden, so dass im zweiten Netzwerk zeitnah eine aktuelle Kopie der Log-Daten vorliegt.

Es ist weiterhin möglich, dass auch im laufenden Betrieb der gesamte Datensatz erneut übertragen werden kann. Dies kann z.B. auf eine Nutzeranforderung hin erfolgen, oder es kann automatisch bei Vorliegen eines vorgebbaren Kriteriums erfolgen. So können beispielsweise in regelmäßigen Abständen, z.B. täglich oder monatlich, die gesamten Log-Daten und Metadaten übertragen werden. Dies hat den Vorteil, dass selbst wenn einzelne Änderungsdaten bei deren Übertragung verlorengegangen sind oder wenn Übertragungsfehler aufgetreten sind, wieder ein vollständiger Datensatz gebildet werden kann.

In einer weiteren vorteilhaften Ausführungsform des Verfahrens wird die geprüfte und zeitlich geordnete Kopie der Log-Daten im zweiten Netzwerk temporär gespeichert.

Die in das zweite Netzwerk kopierten Log-Daten werden anhand der Metadaten zunächst geprüft und synchronisiert. Anschließend werden sie im zweiten Netzwerk temporär gespeichert, d.h. gepuffert. Diese gepufferten Log-Daten stellen dann eine identische, zeitlich synchronisierte Kopie des Log-Datenbestands im ersten Netzwerk dar, welche dann z.B. zur Auswertung weitergeleitet werden kann. Das lokale Puffern im zweiten Netzwerk hat außerdem den Vorteil, dass wiederholte Transfers von Log-Ereignissen erkannt und behandelt werden können. Außerdem erlaubt dies eine Wiederholung der Synchronisation, falls zum Beispiel Log-Daten im zweiten Netzwerk fehlerhaft sind oder komplett fehlen.

In einer weiteren vorteilhaften Ausführungsform des Verfahrens wird die geprüfte und zeitlich geordnete Kopie der Log-Daten im zweiten Netzwerk an einen zweiten Log-Server weitergeleitet.

Es liegt im zweiten Log-Server eine identische, zeitlich synchronisierte Kopie des ursprünglichen Log-Datenbestandes vor. Dort kann eine anschließende Analyse oder Archivierung der Log-Daten stattfinden. Diese Kopie kann zeitnah nach jeder erkannten Änderung aktualisiert werden. Jede Auswertung oder weiterführende Analyse der Log-Daten kann mit dieser identischen Kopie durchgeführt werden, ohne dass direkt in das erste Netzwerk eingegriffen werden muss. Dies gewährleistet zum einen die erforderliche Rückwirkungsfreiheit bei sicherheitskritischen ersten Netzwerken und zum anderen erlaubt es z.B. die Auswertung mit neuester Software, die einfach in das zweite Netzwerk eingebracht werden kann.

In einer weiteren vorteilhaften Ausführungsform des Verfahrens wird eine kryptographische Prüfsumme über die kopierten Log-Daten und/oder die Metadaten im ersten Netzwerk erstellt und mit den Log-Daten und Metadaten an das zweite Netzwerk übertragen.

Anhand einer kryptographischen Prüfsumme, die über die kopierten Log-Daten und/oder Metadaten im ersten Netzwerk erstellt wird, kann überprüft werden, ob der übertragene Datensatz mit dem ursprünglichen Log-Datensatz aus dem ersten Netzwerk übereinstimmt und von einer bekannten Weiterleitungseinheit im ersten Netzwerk stammt. Die kryptographische Prüfsumme kann zum Beispiel eine digitale Signatur, ein Hash-Wert oder ein Nachrichtenauthentifizierungscode sein.

In einer weiteren vorteilhaften Ausführungsform des Verfahrens umfasst die Zeitinformation in den Metadaten eine fortlaufende Log-Identifikationsnummer und/oder einen Zeitstempel für den Zeitpunkt des Kopierens der Log-Daten und/oder einen Zeitstempel für den Zeitpunkt des Übertragens der kopierten Log-Daten in das zweite Netzwerk.

Die Zeitinformation in den Metadaten kann dazu genutzt werden, die chronologische Reihenfolge der einzeln übertragenen Log-Ereignisse zurückzuverfolgen. Wenn Log-Daten von unterschiedlichen Systemen mit verschiedenen Systemzeiten stammen, können anhand der Zeitstempel die Log-Daten in die richtige chronologische Reihenfolge gebracht werden.

In einer weiteren vorteilhaften Ausführungsform des Verfahrens wird die Zeitinformation in den Metadaten unabhängig von einer Systemzeit eines Geräts im ersten Netzwerk gebildet. Das Verfahren ergänzt die Log-Daten mit einem Zeitstempel, der unabhängig von der jeweiligen Systemzeit des Geräts ist. Dieser Zeitstempel ist folglich universell. So kann eine Log-Nachricht zwar eine Zeitinformation, die das Gerät in einem bestimmten Format und Zeitzone erstellt hat, enthalten, doch diese muss nicht eindeutig sein. Durch das Verfahren wird eine Zeitinformation in die zugehörige Meta-Nachricht geschrieben, die eine eindeutige zeitliche Zuordnung gegenüber allen anderen Log-Ereignissen von verschiedenen Geräten im Netzwerk erlaubt. Dies erleichtert die Synchronisation von Ereignissen eines Netzwerks. Weiterhin ist es möglich, dass die Zeitinformation in den Metadaten unabhängig von einer zwischen den Geräten des ersten Netzwerks synchronisierten Systemzeit gebildet wird.

In einer weiteren vorteilhaften Ausführungsform des Verfahrens werden die Log-Daten zwischen mindestens einem ersten Netzwerk und einem zweiten Netzwerk unabhängig von den eigenen Netzwerkzeiten der einzelnen Netzwerke in zeitliche Übereinstimmung gebracht.

Anhand der Zeitinformation in den Metadaten, die unabhängig von den Systemzeiten der Geräte in einem Netzwerk sind, können die Log-Ereignisse eindeutig zeitlich zugeordnet werden. Dies hat den Vorteil, dass kein Gerät oder gesamtes Netzwerk auf eine gemeinsame Uhrzeit gebracht werden muss, wie zum Beispiel durch den Einbau eines GPS-Empfängers.

Sind mehrere Netzwerke mit diesem Verfahren an das zweite Netzwerk angebunden, können deren Log-Ereignisse anhand der Zeitstempel auch zueinander in Verbindung und in zeitliche Reihenfolge gebracht werden.

In einer weiteren vorteilhaften Ausführungsform des Verfahrens wird ein Signal in das erste Netzwerk übergeben und, abhängig von dem Signal, werden die Log-Daten und/oder die zugehörigen Metadaten vom ersten Netzwerk in das zweite Netzwerk erneut partiell oder vollständig übertragen, wenn die übertragenen Log-Daten und/oder Metadaten im zweiten Netzwerk unvollständig sind.

Dies hat den Vorteil, dass im zweiten Netzwerk fehlerhafte oder fehlende Log-Daten und/oder Metadaten nachgefordert werden und dadurch zeitnah ergänzt bzw. vervollständigt werden können.

Die erfindungsgemäße Vorrichtung verarbeitet die Log-Daten rückwirkungsfrei und kann somit ohne zusätzliche Zertifizierung oder Validierung für die Kopplung von sicherheitskritischen Netzen an ein offenes Diagnosenetz genutzt werden. Es muss lediglich ein Log-Server im zu überwachenden Netz vorhanden sein, an den Geräte in diesem Netzwerk Log-Daten übermitteln. Mit Hilfe einer Mithörvorrichtung werden diese Daten mitgehört und kopiert. Das Mithören der Log-Daten im ersten Netzwerk erfolgt parallel zu anderen Prozessen und stört diese nicht. Es ist nicht erforderlich, dass im ersten Netzwerk eine synchronisierte Zeitinformation vorliegt.

Weitere Vorteile der Vorrichtung sind äquivalent zu den Vorteilen des erfindungsgemäßen Verfahrens.

Ein weiterer Aspekt der Erfindung betrifft eine Vorrichtung umfassend eine Weiterleitungseinheit im ersten Netzwerk, die derart ausgebildet ist, Änderungen der Log-Daten und/oder der zugehörigen Metadaten gegenüber der vorher gesendeten Log-Daten und Metadaten kontinuierlich zu erkennen und lediglich die Änderungen in das zweite Netzwerk zu übertragen.

Die Weiterleitungseinheit überwacht, ob in der ersten Verwaltungseinheit im ersten Netzwerk Änderungen im Log-Datenbestand vorliegen. Es werden folglich nur Änderungen der Log-Daten und/oder Metadaten in das zweite Netzwerk übertragen, was die Übertragung schneller und somit das Verfahren effizienter macht.

Außerdem kann die Vorrichtung zur Echtzeit-Analyse von Log-Daten genutzt werden, da die Übertragung in ein zweites Netzwerk, ggf. nach jeder Log-Änderung, ohne Zwischenspeicherung in z.B. eine Log-Datei erfolgt.

In einer weiteren vorteilhaften Ausführungsform umfasst die erfindungsgemäße Vorrichtung eine zweite Verwaltungseinheit im zweiten Netzwerk, die derart ausgebildet ist, die kopierten Log-Daten temporär zu speichern.

Es ist sinnvoll, die Log-Daten im zweiten Netzwerk temporär zu speichern, um zum Beispiel wiederholte Synchronisationsvorgänge zu erkennen. Die geprüften und synchronisierten Log-Ereignisse können von der Verwaltungseinheit an einen zweiten Log-Server für die Analyse oder Archivierung weitergeleitet werden.

In einer weiteren vorteilhaften Ausführungsform umfasst die erfindungsgemäße Vorrichtung mindestens einen Rückkanal von der Empfangseinheit im zweiten Netzwerk zu der Weiterleitungseinheit im ersten Netzwerk, der derart ausgebildet ist, ein Signal in das erste Netzwerk zu übermitteln, wobei, abhängig von dem Signal, die Log-Daten und/oder die zugehörigen Metadaten vom ersten Netzwerk in das zweite Netzwerk erneut partiell oder vollständig übertragen werden, wenn die übertragenen Log-Daten und/oder Metadaten im zweiten Netzwerk unvollständig sind.

Diese Ausführungsvariante der erfindungsgemäßen Vorrichtung ermöglicht einen einfachen und schnellen Weg, den Prozess der Synchronisierung zu wiederholen, falls Log-Daten im zweiten Netzwerk fehlen oder fehlerhaft sind. Durch die erfindungsgemäße Vorrichtung wird ein geschlossener Informationskreis, der die geforderte Rückwirkungsfreiheit bei sicherheitskritischen Netzen gewährleistet, nicht negativ beeinflusst. Der geschlossene Informationskreis wird durch die Mithörvorrichtung, die unidirektionale Kopplungseinheit, die Empfangseinheit im zweiten Netzwerk und dem Rückkanal gebildet. Durch die Integritäts- und Vollständigkeitsinformation in den Metadaten, die gemäß dem Verfahren im ersten Netzwerk bereitgestellt wird, kann im zweiten Netzwerk für jeden Log-Datensatz überprüft werden, ob die Übertragung fehlerhaft oder unvollständig ist.

Ein weiterer Aspekt der Erfindung betrifft ein Computerprogrammprodukt, umfassend Programmcodeteile, die dazu geeignet sind, die Schritte des Verfahrens durchzuführen.

Ausführungsbeispiele des erfindungsgemäßen Verfahrens und Systems sind in den Zeichnungen beispielhaft dargestellt und werden anhand der nachfolgenden Beschreibung näher erläutert. Es zeigen:
- Fig. 1: ein Ablaufdiagramm des erfindungsgemäßen Verfahrens zum rückwirkungsfreien und integritätsgeschützten Synchronisieren von Log-Daten zwischen mindestens zwei getrennten Netzwerken;
- Fig. 2: eine schematische Darstellung eines Ausführungsbeispiels der erfindungsgemäßen Vorrichtung zum rückwirkungsfreien und integritätsgeschützten Synchronisieren von Log-Daten zwischen zwei getrennten Netzwerken;
- Fig. 3: eine schematische Darstellung eines Ausführungsbeispiels der erfindungsgemäßen Vorrichtung zum rückwirkungsfreien und integritätsgeschützten Synchronisieren von Log-Daten zwischen zwei getrennten Netzwerken umfassend einen Rückkanal; und
- Fig. 4: eine schematische Darstellung der zeitlichen Synchronisation von mehreren, unabhängigen Netzwerken mittels der erfindungsgemäßen Vorrichtung.

Einander entsprechende Teile sind in allen Figuren mit den gleichen Bezugszeichen versehen.

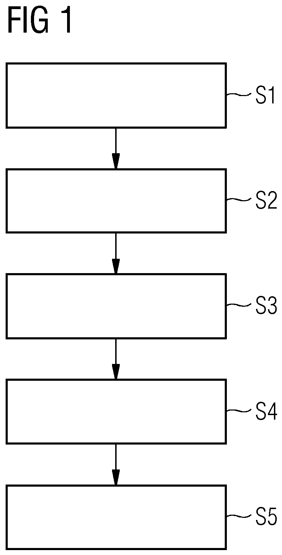

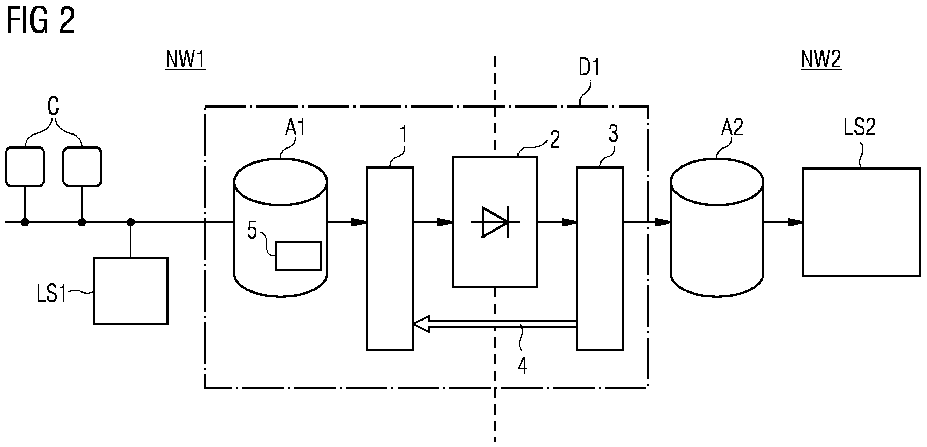

In Figur 1 ist ein Ablaufdiagramm des erfindungsgemäßen Verfahrens zum rückwirkungsfreien und integritätsgeschützten Synchronisieren von Log-Daten zwischen mindestens zwei voneinander getrennten Netzwerken, wie beispielhaft in Figur 2 dargestellt, gezeigt. Die Log-Daten und Informationen von Geräten C mindestens eines ersten Netzwerks NW1 werden an einen systemeigenen Log-Server LS1 übermittelt und dort zentral gesammelt.

Die beschriebene Erfindung kann auf das Vorhandensein eines solchen Log-Servers LS1 aufbauen. Im ersten Schritt S1 des Verfahrens werden mit Hilfe einer Mithörvorrichtung 5 einer ersten Verwaltungseinrichtung A1 die Log-Daten von Geräten C mitgehört und kopiert. Die Mithörvorrichtung ist erfindungsgemäß derart eingerichtet, dass sie die Übermittelung der Log-Daten zwischen Geräten C und Log-Server LS1 mithört. Weitere Konfigurationen der Mithörvorrichtung sind ebenso möglich, um Log-Daten zeitnah im ersten Netzwerk zu kopieren. Die Mithörvorrichtung greift nicht in das Netzwerk ein und stört somit dort keine parallel laufenden Prozesse. Die erste Verwaltungseinheit A1 kann durch eine oder mehrere physische Komponenten, z.B. Prozessoren ausgebildet sein. Die erste Verwaltungseinheit A1 kann damit parallel zu Prozessen im ersten Netzwerk NW1 betrieben werden, so dass die Integrität des Netzwerks geschützt ist.

In vorteilhafter Weise können die Log-Daten einzeln, d.h. ohne sie in eine Log-Datei zu schreiben, mitgehört und übertragen werden. Das Schreiben und anschließende Auslesen von Log-Dateien würde zu einem zeitlichen Versatz führen und würde außerdem die korrekte zeitliche Zuordnung von Log-Ereignissen erschweren. Damit hat dieses Verfahren gegenüber dem Stand der Technik den Vorteil, dass Log-Daten zeitnah in das zweite Netzwerk gespiegelt werden können und eine Echtzeit-Analyse möglich ist.

Im zweiten Schritt S2 werden parallel zum Mithören der Log-Daten, Metadaten der Log-Daten in einer ersten Verwaltungseinheit A1 erstellt.

Die kopierten Log-Daten und zugehörigen Metadaten werden im ersten Netzwerk in der ersten Verwaltungseinheit A1 temporär gespeichert. Dies hat den Vorteil, dass die Synchronisation zu einem späteren Zeitpunkt durchgeführt oder wiederholt werden kann. Die Log-Daten liegen im ersten Netzwerk auch auf dem ersten Log-Server vor, allerdings sind dort üblicherweise keine zusätzlichen Informationen über z.B. Abhängigkeiten oder verschiedene Zeitformate der Log-Daten gegeben. Der erste Log-Server LS1 im ersten Netzwerk NW1 empfängt lediglich die Log-Daten von den Geräten C. Die Metadaten umfassen zusätzliche Informationen über die Log-Daten und werden beim Mithören in der ersten Verwaltungseinheit A1 gebildet. Die Metadaten umfassen Zeitinformation, Integritätsinformation, Ursprungsinformation und Vollständigkeitsinformation und bilden die notwendige Synchronisationsinformation für die Synchronisation der Log-Daten im zweiten Netzwerk NW2.

Mittels einer Weiterleitungseinheit 1 im ersten Netzwerk NW1 kann überprüft werden, ob eine Veränderung des Log-Datenbestandes vorliegt. Entsprechend werden dann lediglich die geänderten Log-Daten und zugehörige Metadaten weitergeleitet.

Um beispielsweise die Rückwirkungsfreiheit zwischen mindestens einem sicherheitskritischen Netzwerk und einem offenen Diagnosenetzwerk zu gewährleisten, werden im nächsten Schritt S3 die Kopie der Log-Daten und ihre Metadaten über eine unidirektionale Kopplungseinheit 2 in das zweite Netzwerk NW2 übertragen. Dadurch ist für die Kopplung von sicherheitskritischen Netzwerken die geforderte Rückwirkungsfreiheit gewährleistet, da so kein unzulässiger Datenstrom in das sicherheitskritische Netzwerk eingebracht werden kann.

Im zweiten Netzwerk NW2 wird im nächsten Schritt S4 die Vollständigkeit, die Integrität und der Ursprung der Log-Daten geprüft bevor sie im folgenden Verfahrensschritt S5 in einer Empfangseinheit 3 im Diagnosenetzwerk NW2 anhand der Metadaten synchronisiert werden. Vorteilhafterweise können die geordneten und kopierten Log-Daten anschließend im zweiten Netzwerk NW2 in einer zweiten Verwaltungseinheit A2 gepuffert werden.

Durch das zeitnahe Spiegeln der Log-Daten im zweiten Netzwerk NW2 kann das Verfahren auch für eine zeitkritische Analyse von Log-Daten in einem externen Netzwerk herangezogen werden. Außerdem kann das Verfahren auf mehrere Netzwerke ausgeweitet werden. So wird vorteilhafterweise sichergestellt, dass Kopien von Log-Daten aus verschiedenen Netzwerken in einem zentralen Netzwerk zusammengeführt werden können und dabei auch die zeitliche Reihenfolge der Log-Daten aus verschiedenen Netzwerken untereinander beibehalten wird.

In Figur 2 ist nun schematisch eine Vorrichtung D1 zum Synchronisieren von Log-Daten zwischen zwei voneinander getrennten Netzwerken dargestellt. Die Erfindung ist nicht auf die Kopplung von nur zwei Netzwerken beschränkt, sondern es können auch mehrere Netzwerke auf diese Weise miteinander gekoppelt und ihr Log-Datenbestand synchronisiert werden.

In der gezeigten Darstellung in Figur 2 werden im ersten Netzwerk NW1, beispielsweise eines Steuerungsnetzwerks, Log-Daten von Geräten C an einen ersten Log-Server LS1 übermittelt. Diese Übermittlung wird von einer ersten Verwaltungseinheit A1 mitgehört und kopiert. Eine Mithörvorrichtung 5 ist erfindungsgemäß derart eingerichtet, dass sie die Kommunikation zwischen den Geräten C und dem Log-Server LS1 im ersten Netzwerk NW1 mithört. Die Mithörvorrichtung 5 ist, wie in Figur 2 gezeigt, Teil der Verwaltungseinheit A1.

Des Weiteren werden in der ersten Verwaltungseinheit A1 parallel zum Mithören Metadaten zu den Log-Daten erzeugt, die für die Synchronisierung notwendig sind. Die Weiterleitungseinheit 1 erkennt Änderungen der Log-Daten und/oder der zugehörigen Metadaten und leitet lediglich diese an das zweite Netzwerk NW2 weiter. Die Log-Daten werden einzeln weitergeleitet und nicht zwischengespeichert oder in ein anderes Format konvertiert.

Das Mithören der Log-Daten im ersten Netzwerk NW1 erfolgt bei deren Übertragung im ersten Netzwerk NW1. Die Übertragung erfolgt von einem Gerät des ersten Netzwerks NW1 zu einem Log-Server LS1 des ersten Netzwerks NW1. Die Metadaten werden erfindungsgemäß beim Mithören durch die Mithörvorrichtung 5 gebildet. Die Metadaten können insbesondere den Zeitpunkt des Mithörens angeben, d.h. einen Zeitstempel, der beim Mithören gebildet wird. Sie können die Mithörvorrichtung 5 angeben, d.h. eine Identifizierungsinformation wie Gerätetyp, Firmwareversion und/oder Seriennummer der Mithörvorrichtung 5. Sie können den Ort im Netzwerk angeben, an dem das Mithören erfolgt bzw. an dem sich die Mithörvorrichtung 5 befindet. Die Metadaten können weiterhin eine Prüfsumme der mitgehörten Daten und/oder von weiteren Metadaten umfassen. Die Prüfsumme kann z.B. eine CRC-Prüfsumme oder eine kryptographische Prüfsumme, z.B. ein kryptographischer Hash-Wert, ein Nachrichtenauthentisierungscode oder eine digitale Signatur, sein.

Im Gegensatz zur dateibasierten Übertragung, muss bei diesem Verfahren nicht darauf gewartet werden bis eine Datei geschrieben ist, die die Änderungen enthält. Damit ist dieses Verfahren effizienter und lässt eine schnelle Reaktion auf Log-Änderungen zu. Eine Weiterleitung der Log-Daten in das zweite Netzwerk NW2 kann des Weiteren von der Weiterleitungseinheit 1 unmittelbar erfolgen und Zugriffskonflikte nebenläufiger Prozesse werden vermieden. Außerdem können in der Weiterleitungseinheit 1 die Log-Daten und/oder die Metadaten mit einer kryptographischen Prüfsumme belegt werden, anhand derer eine Integritäts- und Authentifizierungsprüfung der Log-Daten und/oder Metadaten im zweiten Netzwerk NW2 durchgeführt werden kann.

Über eine unidirektionale Kopplungseinheit 2 werden die Daten in das zweite Netzwerk NW2 übertragen. Die unidirektionale Kopplungseinheit 2 arbeitet rückwirkungsfrei und verhindert damit unzulässigen Datenverkehr in das erste Netzwerk NW1 hinein. Im zweiten Netzwerk NW2 wird in einer Empfangseinheit 3 die Kopie der Log-Daten anhand der Metadaten überprüft und in zeitliche Reihenfolge und Abhängigkeit zueinander gebracht. In der Empfangseinheit 3 kann weiterhin die Authentizität der erhaltenen Log-Daten anhand der kryptographischen Prüfsumme überprüft und die Integrität der transferierten Log-Daten verifiziert werden.

Die kopierten und geordneten Log-Daten können anschließend, nach erfolgreicher Prüfung, an eine zweite Verwaltungseinheit A2 im zweiten Netzwerk NW2 übermittelt und dort gepuffert werden. Von dort können die Log-Daten, die nun in identischer und synchroner Form entsprechend den ursprünglichen Log-Daten im ersten Netzwerk NW1 vorliegen, an einen zweiten Log-Server LS2 weitergeleitet werden. Dort kann eine Auswertung der Log-Daten oder eine Archivierung stattfinden.

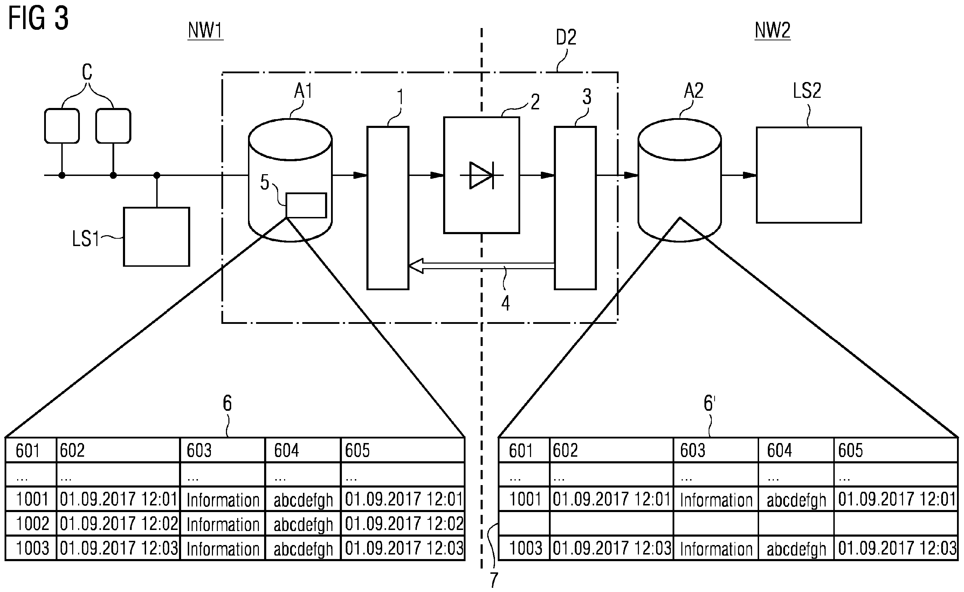

In Figur 3 ist eine weitere vorteilhafte Ausführungsform der Vorrichtung dargestellt. Die Vorrichtung D2 dient zum rückwirkungsfreien und integritätsgeschützten Synchronisieren von Log-Daten zwischen mindestens einem ersten Netzwerk NW1 und einem zweiten Netzwerk NW2, wobei hier außerdem ein Rückkanal 4 von der Empfangseinheit 3 zur Weiterleitungseinheit 1 gezeigt ist. Über diesen Rückkanal 4 kann eine erneute partielle oder vollständige Übertragung der Daten eingeleitet werden. Wenn im zweiten Netzwerk NW2 in der Empfangseinrichtung 3 festgestellt wird, dass die übertragene Kopie der Log-Daten fehlerhaft ist, kann mittels eines Signals, das über diesen Rückkanal 4 gesendet wird, eine Wiederholung der Synchronisation gemäß dem Verfahren angestoßen werden. Dazu wird im ersten Netzwerk NW1 in der ersten Verwaltungseinheit A1 eine Kopie der Log-Daten und die zugehörigen Metadaten gepuffert. So kann einfach und effizient sichergestellt werden, dass der Log-Datenbestand im zweiten Netzwerk NW2 zeitnah und vollständig vorliegt.

Die Rückwirkungsfreiheit des Synchronisationsverfahrens ist durch den Rückkanal 4 nicht gefährdet, da lediglich ein Signal übergeben wird, das ein wiederholtes Übertragen der Log-Daten und Metadaten einleitet. Der Rückkanal 4 kann beispielsweise so konfiguriert sein, dass über ihn nur ein vorbestimmtes Signal gesendet und im ersten Netzwerk NW1 empfangen wird.

Außerdem ist in Figur 3 beispielhaft das erfindungsgemäß gebildete Datenformat 6 gezeigt, in welchem die Informationen über die Log-Daten gespeichert sind. Diese Metadaten werden in der ersten Verwaltungseinheit A1 im ersten Netzwerk NW1 erstellt. Die Zeitinformation in den Metadaten umfasst eine fortlaufende Log-Identifikationsnummer 601, einen ersten Zeitstempel 602 für den Zeitpunkt des Kopierens der Log-Daten und einen zweiten Zeitstempel 605 für den Zeitpunkt des Übertragens der kopierten Log-Daten in das zweite Netzwerk und des Weiteren eine Ursprungs-und Vollständigkeitsinformation 603 und eine Prüfsumme 604. Anhand dieser Informationen kann im zweiten Netzwerk die Synchronisation und die Überprüfung der Integrität und Vollständigkeit der Log-Daten durchgeführt werden.

Jedes Log-Ereignis, das von einem Gerät C an den ersten Log-Server LS1 gesendet wird, erhält eine eindeutige, fortlaufende Log-Identifikationsnummer 601. Anhand derer kann im zweiten Netzwerk NW2 die chronologische Reihenfolge der Log-Ereignisse zurückverfolgt werden. Außerdem kann auch anhand der Log-Identifikationsnummer 601 überprüft werden, ob die übertragenen Log-Daten vollständig sind. Zum Beispiel können fehlende Log-Einträge im zweiten Netzwerk NW2 anhand von Lücken in der Folge der Log-Identifikationsnummern 601 erkannt werden. Dies ist schematisch in Figur 3 gezeigt. Die übertragenen Metadaten im erfindungsgemäß gebildeten Datenformat 6', die in der zweiten Verwaltungseinheit A2 abgelegt werden, weisen eine Lücke 7 auf, d.h. ein Eintrag fehlt. In so einem Fall kann über den Rückkanal 4 eine erneute, partielle Synchronisation dieses fehlenden Datensatzes angestoßen werden.

Die Log-Daten werden mit einem ersten Zeitstempel 602 für den Zeitpunkt des Erstellens der Kopie der Log-Nachricht und einem zweiten Zeitstempel 605 für den Zeitpunkt des Weiterleitens versehen. Diese Zeitstempel sind unabhängig von den Systemzeiten der Geräte C, von denen die Log-Daten stammen. Im Fall von mehreren Geräten C mit unterschiedlichen Systemzeiten, die alle ihre Log-Daten an den Log-Server LS1 senden, wird mit diesen, für das Netzwerk global geltenden, Zeitstempeln eine eindeutige zeitliche Zuordnung der Log-Ereignisse zueinander garantiert.

Des Weiteren kann beispielsweise eine Synchronisationsinformation der Log-Daten der letzten Stunde, der letzten acht Stunden oder der letzten 24 Stunden angestoßen werden. Dies ermöglicht einen konsistenten, vollständigen Log-Datensatz im zweiten Netzwerk NW2 in der zweiten Verwaltungseinheit A2 einzustellen. Wenn auch dies fehlschlägt, so kann eine vollständige Re-Synchronisation angestoßen werden, d.h. der vollständige Log-Datensatz wird vom ersten Netzwerk NW1 in das zweite Netzwerk NW2 übertragen.

Weiterhin ist es möglich, dass die von mehreren ersten Netzwerken bereitgestellten Log-Daten anhand der jeweils zugeordneten Metadaten in die richtige zeitliche Reihenfolge gebracht werden. Dies hat den Vorteil, dass mehrere von separaten Mithörvorrichtungen bereitgestellte Log-Daten auch untereinander in die korrekte zeitliche Reihenfolge gebracht werden können. Eine Mithörvorrichtung kann einen Zeitsynchronisationsempfänger aufweisen, z.B. einen Satellitennavigationsempfänger, wie z.B. zu GPS, Galileo, Glonass, Beidou, oder einen anderen Zeitempfänger, wie z.B. DCF77. Dies ermöglicht, dass Log-Daten zeitlich korrekt zugeordnet werden können, auch wenn in einem oder mehreren ersten Netzwerken die internen Knoten nicht auf die gleiche Zeitquelle synchronisiert sind. Dies kann z.B. in isoliert betriebenen sicherheitskritischen Steuerungsnetzwerken der Fall sein.

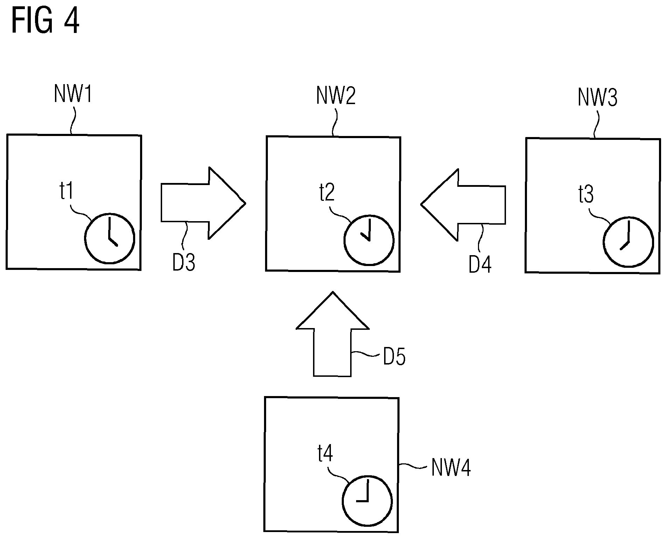

Ein zentraler Bestandteil des Verfahrens ist die zeitliche Synchronisation der Log-Daten unabhängig von der Systemzeit oder dem Zeitformat eines Geräts, von dem die Log-Daten ursprünglich gesendet wurden, oder der Netzwerkzeit des jeweiligen Netzwerks. In Figur 4 ist die Synchronisation von Log-Daten aus mehreren Netzwerken NW1, ..., NW4 schematisch dargestellt. Jedes Netzwerk NW1, NW2, NW3, NW4 hat seine eigene Netzwerkzeit t1, t2, t3, t4. Das zweite Netzwerk NW2 soll hier das Diagnosenetzwerk darstellen, in dem die Synchronisation für eine Auswertung der Log-Daten aus allen anderen Netzwerken NW1, NW3 und NW4 stattfindet.

Von allen anderen Netzwerken NW1, NW3 und NW4 werden kopierte Log-Daten und zugehörige Metadaten an das zweite Netzwerk NW2 übermittelt, um dort z.B. in richtiger chronologischer Reihenfolge ausgewertet zu werden. Die erfindungsgemäße Vorrichtung D3, D4 und D5, die in Figur 2 und 3 beispielhaft dargestellt ist, ist jeweils durch einen Pfeil dargestellt, der die rückwirkungsfreie Übertragung symbolisieren soll.

Jedes Netzwerk NW1, NW3 und NW4 kann auf einer eigenen Netzwerkzeit laufen, die nicht notwendigerweise mit den Zeiten oder Zeitzonen der anderen Netzwerke übereinstimmen muss. Um im Diagnosenetzwerk NW2 die empfangenen Log-Daten der verschiedenen Netzwerke NW1, NW3 und NW4, zu analysieren, müssen sie in die korrekte zeitliche Reihenfolge gebracht werden. Dies erfolgt mittels der Metadaten, welche in jedem der Netzwerke NW1, NW3 und NW4 erzeugt und an das Diagnosenetzwerk NW2 weitergeleitet werden. Die Metadaten beinhalten die Informationen, die nötig sind, um die Log-Daten eines Netzwerks eindeutig zuzuordnen. Diese Information ist eindeutig für jedes Netzwerk. Folglich lässt sich im Diagnosenetzwerk NW2 anhand der Metadaten der Log-Daten der verschiedenen Netzwerke NW1, NW3 und NW4 eine globale Abhängigkeit und zeitliche Zuordnung ableiten. Die Weiterleitung in das Diagnosenetzwerk NW2 erfolgt unidirektional, d.h. rückwirkungsfrei, und ohne Zeitversatz, da die Log-Daten einzeln und nicht gebündelt in einer Log-Datei übermittelt werden. Dort kann anhand der Zeitinformation in den Metadaten auch eine kombinierte Reihenfolge der Log-Ereignisse aus verschiedenen Netzwerken erstellt werden. Folglich können die Log-Daten aus verschiedenen Netzwerken in Korrelation gesetzt werden. Die Uhrzeiten der jeweiligen Netzwerke t1, t3 und t4 werden durch das erfindungsgemäße Verfahren mit der Uhrzeit t2 synchronisiert, d.h. im zweiten Netzwerk NW2 wird eine Abhängigkeit zwischen der eigenen Netzwerkzeit t2 und den jeweiligen anderen Netzwerkzeiten t1, t3, und t4 bestimmt. Die Auswertung und Überprüfung der Log-Daten kann in ihrer richtigen Reihenfolge zentral im Diagnosenetzwerk NW2 durchgeführt werden.

## Patentansprüche

1. Verfahren zum unidirektionalen und integritätsgeschützten Synchronisieren von Log-Daten zwischen mindestens einem ersten Netzwerk (NW1) und einem zweiten Netzwerk (NW2), wobei:
- im ersten Netzwerk (NW1) durch eine Mithörvorrichtung (5) Log-Daten mitgehört und kopiert werden (S1),
- beim Mithören durch die Mithörvorrichtung (5) Metadaten der Log-Daten gebildet werden (S2),
- die kopierten Log-Daten und die zugehörigen Metadaten im ersten Netzwerk (NW1) temporär gespeichert werden (S3),
- die kopierten Log-Daten und die zugehörigen Metadaten vom ersten Netzwerk (NW1) über eine unidirektionale Kopplungseinheit (2) unidirektional in das zweite Netzwerk (NW2) übertragen werden (S4)
und
- im zweiten Netzwerk (NW2) die kopierten Log-Daten anhand der Metadaten geprüft und zeitlich geordnet werden (S5),
wobei die Log-Daten von Geräten (C) des mindestens einen ersten Netzwerks (NW1) an einen Log-Server (LS1) im ersten Netzwerk (NW1) übermittelt werden und die Mithörvorrichtung (5) die Übermittelung der Log-Daten zwischen Geräten (C) und Log-Server (LS1) mithört.

2. Verfahren nach Anspruch 1, wobei die Metadaten Zeitinformation, Integritätsinformation, Ursprungsinformation und Vollständigkeitsinformation umfassen.

3. Verfahren nach einem der vorangehenden Ansprüche, wobei im ersten Netzwerk (NW1) Änderungen der Log-Daten und/oder der zugehörigen Metadaten gegenüber der vorher gesendeten Log-Daten und Metadaten kontinuierlich erkannt werden und lediglich die Änderungen in das zweite Netzwerk (NW2) übertragen werden.

4. Verfahren nach einem der vorangehenden Ansprüche, wobei die geprüfte und zeitlich geordnete Kopie der Log-Daten im zweiten Netzwerk (NW2) temporär gespeichert wird.

5. Verfahren nach einem der vorangehenden Ansprüche, wobei die geprüfte und zeitlich geordnete Kopie der Log-Daten im zweiten Netzwerk (NW2) an einen zweiten Log-Server (LS2) weitergeleitet wird.

6. Verfahren nach einem der vorangehenden Ansprüche, wobei eine kryptographische Prüfsumme über die kopierten Log-Daten und/oder die Metadaten im ersten Netzwerk (NW1) erstellt wird und mit den Log-Daten und Metadaten an das zweite Netzwerk (NW2) übertragen wird.

7. Verfahren nach einem der vorangehenden Ansprüche, wobei die Zeitinformation in den Metadaten eine fortlaufende Log-Identifikationsnummer und/oder einen ersten Zeitstempel (602) für den Zeitpunkt des Kopierens der Log-Daten und/oder einen zweiten Zeitstempel (605) für den Zeitpunkt des Übertragens der kopierten Log-Daten in das zweite Netzwerk (NW2) umfasst.

8. Verfahren nach einem der vorangehenden Ansprüche, wobei die Zeitinformation in den Metadaten unabhängig von einer Systemzeit eines Geräts (C) im ersten Netzwerk (NW1) gebildet wird.

9. Verfahren nach vorangehenden Ansprüchen, wobei die Log-Daten zwischen mindestens einem ersten Netzwerk (NW1) und einem zweiten Netzwerk (NW2) unabhängig von den eigenen Netzwerkzeiten der einzelnen Netzwerke in zeitliche Übereinstimmung gebracht werden.

10. Verfahren nach vorangehenden Ansprüchen, wobei ein Signal in das erste Netzwerk (NW1) übermittelt wird und, abhängig von dem Signal, die Log-Daten und/oder die zugehörigen Metadaten vom ersten Netzwerk (NW1) in das zweite Netzwerk (NW2) erneut partiell oder vollständig übertragen werden, wenn die übertragenen Log-Daten und/oder Metadaten im zweiten Netzwerk (NW2) unvollständig sind.

11. Vorrichtung zum unidirektionalen und integritätsgeschützten Synchronisieren von Log-Daten zwischen mindestens einem ersten Netzwerk (NW1) und einem zweiten Netzwerk (NW2), umfassend:
- eine Mithörvorrichtung (5) in einer ersten Verwaltungseinheit (A1), die derart ausgebildet ist, Log-Daten in dem mindestens ersten Netzwerk (NW1) mitzuhören und zu kopieren, beim Mithören Metadaten der Log-Daten zu bilden und die Log-Daten und Metadaten temporär zu speichern,
- eine unidirektionale Kopplungseinheit (2), die derart ausgebildet ist, die kopierten Log-Daten und die zugehörigen Metadaten vom ersten Netzwerk (NW1) unidirektional in das zweite Netzwerk (NW2) zu übertragen
und
- eine Empfangseinheit (3) im zweiten Netzwerk (NW2), die derart ausgebildet ist, die kopierten Log-Daten anhand der Metadaten zu überprüfen und zeitlich zuzuordnen,
wobei die Log-Daten von Geräten (C) des mindestens einen ersten Netzwerks (NW1) an einen Log-Server (LS1) im ersten Netzwerk (NW1) übermittelt werden und die Mithörvorrichtung (5) die Übermittelung der Log-Daten zwischen Geräten (C) und Log-Server (LS1) mithört.

12. Vorrichtung (D1) nach Anspruch 11, die eine Weiterleitungseinheit (1) im ersten Netzwerk (NW1) umfasst, die derart ausgebildet ist, Änderungen der Log-Daten und/oder der zugehörigen Metadaten gegenüber der vorher gesendeten Log-Daten und Metadaten kontinuierlich zu erkennen und lediglich die Änderungen in das zweite Netzwerk (NW2) zu übertragen.

13. Vorrichtung nach Anspruch 11 umfassend eine zweite Verwaltungseinheit (A2) im zweiten Netzwerk (NW2), die derart ausgebildet ist, die kopierten Log-Daten temporär zu speichern.

14. Vorrichtung (D2) nach Anspruch 11 umfassend mindestens einen Rückkanal (4) von der Empfangseinheit (3) im zweiten Netzwerk (NW2) zu der Weiterleitungseinheit (1) im ersten Netzwerk (NW1), der derart ausgebildet ist, ein Signal in das erste Netzwerk (NW1) zu übermitteln, wobei, abhängig von dem Signal, die Log-Daten und/oder die zugehörigen Metadaten vom ersten Netzwerk (NW1) in das zweite Netzwerk (NW2) erneut partiell oder vollständig übertragen werden, wenn die übertragenen Log-Daten und/oder Metadaten im zweiten Netzwerk (NW2) unvollständig sind.

15. Computerprogrammprodukt, das direkt in einen programmierbaren Computer ladbar ist, umfassend Programmcodeteile, die dazu geeignet sind, die Schritte des Verfahrens nach einem der Ansprüche 1 bis 10 durchzuführen.

## Claims

1. Method for unidirectional and integrity-protected synchronization of log data between at least one first network (NW1) and a second network (NW2), wherein:
- log data are monitored and copied in the first network (NW1) by a monitoring apparatus (5) (S1),
- metadata of the log data are formed during the monitoring by the monitoring apparatus (5) (S2),
- the copied log data and the associated metadata are temporarily stored in the first network (NW1) (S3),
- the copied log data and the associated metadata are transmitted from the first network (NW1) to the second network (NW2) unidirectionally via a unidirectional coupling unit (2) (S4),
and
- the copied log data are checked and chronologically organized in the second network (NW2) on the basis of the metadata (S5),
wherein the log data from devices (C) of the at least one first network (NW1) being transferred to a log server (LS1) in the first network (NW1), and the monitoring apparatus (5) monitoring the transfer of the log data between devices (C) and log server (LS1).

2. Method according to Claim 1, wherein the metadata comprise time information, integrity information, origin information and completeness information.

3. Method according to either of the preceding claims, wherein changes in the log data and/or in the associated metadata in comparison with the previously sent log data and metadata are continuously detected in the first network (NW1) and just the changes are transmitted to the second network (NW2) .

4. Method according to one of the preceding claims, wherein the checked and chronologically organized copy of the log data is temporarily stored in the second network (NW2).

5. Method according to one of the preceding claims, wherein the checked and chronologically organized copy of the log data is forwarded in the second network (NW2) to a second log server (LS2).

6. Method according to one of the preceding claims, wherein a cryptographic checksum for the copied log data and/or the metadata is created in the first network (NW1) and is transmitted to the second network (NW2) with the log data and metadata.

7. Method according to one of the preceding claims, wherein the time information in the metadata comprises a serial log identification number and/or a first timestamp (602) for the time at which the log data were copied and/or a second timestamp (605) for the time at which the copied log data were transmitted to the second network (NW2).

8. Method according to one of the preceding claims, wherein the time information in the metadata is formed independently of a system time of a device (C) in the first network (NW1).

9. Method according to preceding claims, wherein the log data have their timings matched between at least one first network (NW1) and a second network (NW2) independently of the specific network times of the individual networks.

10. Method according to preceding claims, wherein a signal is transferred to the first network (NW1) and, on the basis of the signal, the log data and/or the associated metadata are partially or completely transmitted from the first network (NW1) to the second network (NW2) again if the transmitted log data and/or metadata in the second network (NW2) are incomplete.

11. Apparatus for unidirectional and integrity-protected synchronization of log data between at least one first network (NW1) and a second network (NW2), comprising:
- a monitoring apparatus (5) in a first management unit (A1) that is designed to monitor and copy log data in the at least first network (NW1), to form metadata of the log data during the monitoring and to temporarily store the log data and metadata,
- a unidirectional coupling unit (2) that is designed to transmit the copied log data and the associated metadata from the first network (NW1) to the second network (NW2) unidirectionally,
and
- a receiving unit (3) in the second network (NW2) that is designed to check, and associate the timings of, the copied log data on the basis of the metadata,
wherein the log data from devices (C) of the at least one first network (NW1)being transferred to a log server (LS1) in the first network (NW1), and the monitoring apparatus (5) monitoring the transfer of the log data between devices (C) and log server (LS1).

12. Apparatus (D1) according to Claim 11, comprising a forwarding unit (1) in the first network (NW1) that is designed to continuously detect changes in the log data and/or in the associated metadata in comparison with the previously sent log data and metadata and to transmit just the changes to the second network (NW2).

13. Apparatus according to Claim 11, comprising a second management unit (A2) in the second network (NW2) that is designed to temporarily store the copied log data.

14. Apparatus (D2) according to Claim 11, comprising at least one return channel (4) from the receiving unit (3) in the second network (NW2) to the forwarding unit (1) in the first network (NW1) that is designed to transfer a signal to the first network (NW1), wherein, on the basis of the signal, the log data and/or the associated metadata are partially or completely transmitted from the first network (NW1) to the second network (NW2) again if the transmitted log data and/or metadata in the second network (NW2) are incomplete.

15. Computer program product directly loadable into a programmable computer, comprising program code portions suitable for performing the steps of the method according to one of Claims 1 to 10.

## Revendications

1. Procédé de synchronisation unidirectionnelle et protégée en intégrité de données de journal entre au moins un premier réseau (NW1) et un deuxième réseau (NW2), dans lequel :
- au sein du premier réseau (NW1), les données de journal sont écoutées et copiées (S1) grâce à un dispositif d'écoute (5),
- des métadonnées des données de journal sont formées (S2) lors de l'écoute grâce au dispositif d'écoute (5),
- les données de journal copiées et les métadonnées associées sont stockées (S3) de manière temporaire dans le premier réseau (NW1),
- les données de journal copiées et les métadonnées associées sont transmises (S4) de manière unidirectionnelle du premier réseau (NW1) au deuxième réseau (NW2) par l'intermédiaire d'une unité de couplage unidirectionnelle (2)
et
- au sein du deuxième réseau (NW2), les données de journal copiées sont vérifiées et ordonnées dans le temps (S5) à l'aide des métadonnées, dans lequel les données de journal des appareils (C) du au moins un premier réseau (NW1) sont transmises à un serveur de journal (LS1) du premier réseau (NW1) et le dispositif d'écoute (5) écoute la transmission des données de journal entre les appareils (C) et le serveur de journal (LS1).

2. Procédé selon la revendication 1, dans lequel les métadonnées comprennent des informations de temps, des informations d'intégrité, des informations d'origine et des informations de complétude.

3. Procédé selon l'une quelconque des revendications précédentes, dans lequel, au sein du premier réseau (NW1), les modifications des données de journal et/ou des métadonnées associées sont détectées en continu par comparaison avec les données de journal et les métadonnées envoyées précédemment et seules les modifications sont transmises au deuxième réseau (NW2).

4. Procédé selon l'une quelconque des revendications précédentes, dans lequel la copie vérifiée et ordonnée dans le temps des données de journal est stockée de manière temporaire dans le deuxième réseau (NW2).

5. Procédé selon l'une quelconque des revendications précédentes, dans lequel la copie vérifiée et ordonnée dans le temps des données de journal est réacheminée dans le deuxième réseau (NW2)vers un deuxième serveur de journal (LS2).

6. Procédé selon l'une quelconque des revendications précédentes, dans lequel une somme de contrôle cryptographique des données de journal copiées et/ou des métadonnées est créée dans le premier réseau (NW1) et est transmise au deuxième réseau (NW2) avec les données de journal et les métadonnées.

7. Procédé selon l'une quelconque des revendications précédentes, dans lequel les informations de temps contenues dans les métadonnées comprennent un numéro d'identification de journal progressif et/ou un premier horodatage (602) correspondant à l'instant de la copie des données de journal et/ou un deuxième horodatage (605) correspondant à l'instant de la transmission des données de journal copiées au deuxième réseau (NW2).

8. Procédé selon l'une quelconque des revendications précédentes, dans lequel les informations de temps contenues dans les métadonnées sont formées indépendamment d'un temps système d'un appareil (C) du premier réseau (NW1).

9. Procédé selon les revendications précédentes, dans lequel les données de journal sont placées en coïncidence temporelle entre au moins un premier réseau (NW1) et un deuxième réseau (NW2) indépendamment des temps de réseau intrinsèques des différents réseaux.

10. Procédé selon les revendications précédentes, dans lequel un signal est transmis au premier réseau (NW1) et, en fonction dudit signal, les données de journal et/ou les métadonnées associées sont à nouveau transmises, de manière partielle ou complète, du premier réseau (NW1) au deuxième réseau (NW2) si les données de journal et/ou les métadonnées transmises sont incomplètes dans le deuxième réseau (NW2).

11. Dispositif de synchronisation unidirectionnelle et protégée en intégrité de données de journal entre au moins un premier réseau (NW1) et un deuxième réseau (NW2), comprenant :
- un dispositif d'écoute (5) au sein d'une première unité de gestion (A1), qui est conçu pour écouter et copier des données de journal dans le au moins un premier réseau (NW1), pour former des métadonnées des données de journal lors de l'écoute et pour stocker de manière temporaire les données de journal et les métadonnées,
- une unité de couplage unidirectionnelle (2), qui est conçue pour transmettre de manière unidirectionnelle les données de journal copiées et les métadonnées associées du premier réseau (NW1) au deuxième réseau (NW2)
et
- une unité de réception (3) au sein du deuxième réseau (NW2), qui est conçue pour, à l'aide des métadonnées, vérifier et ordonner dans le temps les données de journal copiées,
dans lequel les données de journal des appareils (C) du au moins un premier réseau (NW1) sont transmises à un serveur de journal (LS1) au sein du premier réseau (NW1) et le dispositif d'écoute (5) écoute la transmission des données de journal entre les appareils (C) et le serveur de journal (LS1).

12. Dispositif (D1) selon la revendication 11, qui comprend une unité de réacheminement (1) au sein du premier réseau (NW1), qui est conçue pour reconnaître en continu des modifications des données de journal et/ou des métadonnées associées par comparaison avec les données de journal et les métadonnées envoyées précédemment et pour ne transmettre que les modifications au deuxième réseau (NW2).

13. Dispositif selon la revendication 11, comprenant une deuxième unité de gestion (A2) au sein du deuxième réseau (NW2), qui est conçue pour stocker de manière temporaire les données de journal copiées.

14. Dispositif (D2) selon la revendication 11, comprenant au moins un canal de retour (4) allant de l'unité de réception (3) au sein du deuxième réseau (NW2) jusqu'à l'unité de réacheminement (1) au sein du premier réseau (NW1), qui est conçu pour transmettre un signal au premier réseau (NW1), dans lequel, en fonction dudit signal, les données de journal et/ou les métadonnées associées sont à nouveau transmises, de manière partielle ou complète, du premier réseau (NW1) au deuxième réseau (NW2) si les données de journal et/ou les métadonnées transmises sont incomplètes dans le deuxième réseau (NW2).

15. Produit de programme informatique pouvant être chargé directement dans un ordinateur programmable, comprenant des parties de code de programme appropriées pour mettre en œuvre les étapes du procédé selon l'une quelconque des revendications 1 à 10.
